# EUROPEAN PATENT SPECIFICATION

(11) **EP 3 468 867 B1**
(45) Date of publication and mention of the grant of the patent: **20.05.2020**
(21) Application number: 17732839.0
(22) Date of filing: 14.06.2017
(51) Int. Cl.: B63J 3/04, H02J 3/46

(54) **A SYSTEM FOR CONNECTING AN ELECTRICAL POWER DISTRIBUTION OF A SHIP TO A SHORE SIDE ELECTRICAL POWER SUPPLY**
SYSTEM ZUM ANSCHLIESSEN EINER STROMVERTEILUNG EINES SCHIFFES AN EINE LANDSEITIGE STROMVERSORGUNG
SYSTÈME DE RACCORDEMENT D'UNE DISTRIBUTION D'ÉNERGIE ÉLECTRIQUE D'UN NAVIRE À UNE ALIMENTATION ÉLECTRIQUE À QUAI

(30) Priority: 14.06.2016 LU 93105
(43) Date of publication of application: 17.04.2019
(73) Proprietor: Ipalco BV, 3447 GK Woerden (NL)
(72) Inventor: REALE, Davide, 16154 Genova (IT); BRANDEL, Mikael, 28036 Davidson (US)
(74) Representative: Aronova
(86) International application number: PCT/EP2017/064582
(87) International publication number: WO 2017/216244

(56) References cited:
- WO-A1-2006/008849
- JP-A- 2009 023 579
- KR-A- 20130 011 233

## Description

### Technical Field:

The present invention generally relates to a system for connecting an electrical power distribution system on a ship to a shore side electrical power supply. It relates more particularly to such a system comprising: at least two stackable shore power supply containers to be arranged on the ship, each of the stackable shore power supply containers including at least one shore power transfer cable for connecting the respective stackable shore power supply container to the shore power supply; and a switch panel for selectively connecting any one of these stackable shore power supply containers to the electrical power distribution system on the ship.

### Background Art:

Such a system is disclosed in US 2007/0251784 A1 assigned to the applicant of the present application. In one embodiment, this prior art system comprises two identical shore power supply containers. One of these shore power supply containers is arranged on the port side, the other one on the starboard side of the ship. Each of these two shore power supply containers is connected via an on-board cable to a power inlet unit of the ship. This power inlet unit of the ship has to include, amongst others, a switch panel for selectively connecting either the port side or the starboard side shore power supply container to the electrical power distribution system on the ship, as well as circuit breakers and grounding gear for each on-board cable connecting the power inlet unit of the ship the shore power supply containers. Further circuit breakers and grounding gear have to be provided as electrical inlet protections and maintenance grounding facilities have to be provided in each of the shore power supply containers.

JP 2009023579 discloses a similar system. A so-called feeding package (10) contained in a container (12) is arranged on the deck of the ship along the port side and an identical feeding package (10) is arranged on the deck of the ship along the starboard side. Each of these two feeding packages (10) is connected via a shore power feed-in socket (34), which is located on the deck of the ship, to a ship-side shore power feed-in circuit. This ship-side shore power feed-in circuit further comprises at least a switch-board (38) and a ship-side circuit breaker (3), which are both located in the hull of the ship below the feeding packages (10). This switch-board (38) allows to selectively connect either the port side or the starboard side shore power feeding package (10) via the ship-side circuit breaker (3) to an existing ship-side power distribution (1, 2). Consequently, before being capable to use the feeding packages (10) proposed in JP 2009023579 for connecting the ship to a shore side electrical power supply, the ship has to be equipped with the described ship-side shore power feed-in circuit comprising at least the switch-board (38) and the ship-side circuit breaker (3).

It is an object of the present invention to make a system for connecting an electrical power distribution system on a ship to a shore side electrical power supply easier to install and more efficient.

### Summary of invention:

According to a first aspect of the invention, this object is achieved by installing the switch panel, which is used for selectively connecting any one of the stackable shore power supply containers to the electrical power distribution system on the ship, in one of these stackable shore power supply containers, wherein the latter forms a "master" shore power supply container. At least one of the other stackable shore power supply containers forms a "slave" shore power supply container that is connected to the switch panel of the master shore power supply container. It follows that the master shore power supply container is capable of selectively receiving shore power either through its own shore power transfer cable or through the at least one slave shore power supply container connected to its switch panel. With such a system, the power inlet unit of the ship must no longer equipped with a switch panel for this pair of shore power supply containers. In the factory, the switch panel can already be mounted into the master shore power supply container, wherein it can already be electrically connected to the shore power transfer cable of the master shore power supply container. Furthermore, also in the factory, the master shore power supply container can be efficiently prepared: (1) for connection by means of a first shore power system cable to the electrical power distribution system of the ship; and (2) for connection by means of a second shore power system cable to the slave shore power supply container. Consequently, installing the proposed system on the ship principally just requires: (1) arranging the master shore power supply container and the slave shore power supply container in suitable positions of the ship; (2) connecting the master shore power supply container to an electrical panel of the electrical power distribution system of the ship; and (3) connecting the at least one slave shore power supply container to the switch panel already pre-installed in the master shore power supply container. Retrofitting existing ships with a shore side electrical power supply becomes much easier, as technical interventions on the existing power distribution system on a ship are reduced to a minimum. Furthermore, maintenance of the system becomes more efficient, because most of the protection, safety and control equipment of the system can be concentrated in the master shore power supply container. Last but not least, it becomes easier to retrofit bigger ships with more than two power supply containers.

The master shore power supply container normally includes a shore power outlet, to be electrically connected to the electrical power distribution system on the ship, and a shore power inlet, to be electrically connected to one of the slave shore power supply containers. It will be noted that a "shore power outlet" or "shore power inlet" as used herein may e.g. be an easily separable connection possibility (like a plug-type or socket-type connection) for connecting thereto a cable in an easily separable way or a permanent connection possibility (like a screw-terminal connection or the like) for connecting thereto a cable or a power bus in a (more) permanent way. The "shore power inlet" and/or "shore power outlet" may be located inside or outside of the shore power supply container.

The switch panel contained in the master shore power supply container advantageously includes a first motorized switch, which is connected to the shore power transfer cable of the master shore power supply container, and a second motorized switch, which is connected to the shore power inlet to which the slave shore power supply container is to be electrically connected.

In a preferred embodiment, the first motorized switch provides in its open position a connection to ground of the shore power transfer cable of the master shore power supply container, and the second motorized switch provides in its open position a connection to ground of the shore power inlet to which the slave shore power supply container is to be electrically connected. This embodiment provides the possibility of easy maintenance grounding of all electrical system equipment installed before the switch panel, including easy maintenance grounding of the electrical system equipment of the slave shore power supply container in the master shore power supply container.

Preferably the master shore power supply container further comprises a safety interlocking system preventing that the first motorized switch and second motorized switch can be simultaneously closed. This safety interlocking system reliably warrants that the shore power transfer cable is in a tensionless state when it is not connected to shore power.

In a preferred embodiment, the master shore power supply container includes a circuit breaker electrically connected between its switch panel and its shore power outlet. It will consequently be appreciated that one circuit breaker is basically sufficient for electrically protecting the whole system added to the ship.

In a preferred embodiment, the master shore power supply container includes a grounding switchgear electrically connected between its circuit breaker and its shore power outlet. This embodiment provides the possibility of easy maintenance grounding of all electrical system equipment installed after the switch panel.

If the ship requires a different tension than the tension of shore power, a step-down transformer can be arranged in the master shore power supply container, where it is electrically connected between the switch panel and the shore power outlet. In a preferred implementation of this embodiment, an inlet circuit breaker is arranged in the master shore power supply container, where it is electrically connected between the switch panel and the step-down transformer; and an outlet circuit breaker arranged in the master shore power supply container, where it is electrically connected between the step-down transformer and the shore power outlet. Alternatively, the step-down transformer can also be installed outside of the master shore power supply container.

The electrical equipment of the slave shore power supply container can be much simpler than that of the master shore power supply container. Its shore power transfer cable can be directly connected to a shore power outlet of the slave shore power supply container. No additional switches, circuit breakers or maintenance grounding gear are required in the slave shore power supply container.

It is not excluded that the master shore power supply container includes more than one shore power inlet to which a slave shore power supply container can be electrically connected, and that the switch panel contained in the master shore power supply container includes, for each of these shore power inlets, a motorized switch electrically connected thereto. With this embodiment it becomes possible to arrange more than one slave shore power supply container on the ship and to connect them to a single master shore power supply container.

Normally, a first of the stackable shore power supply containers will be arranged on the starboard side of the ship, and a second of the stackable shore power supply containers will be arranged on the port side of the ship.

The shore power transfer cable for connecting the respective stackable shore power supply container to the shore side electrical power supply is usually part of a cable management system including a cable reel onto which it is wound.

The master shore power supply container advantageously contains a master control system, communicating with and receiving instructions from a control room on the ship, and each shore power supply container further contains a slave control system communicating with and receiving instructions from the master control system.

The stackable shore power supply container is preferably an intermodal container or has substantially the same dimensions and fixing possibilities as an intermodal container.

### Brief description of drawings:

The afore-described and other features, aspects and advantages of the invention will be better understood with regard to the following description of embodiments of the invention and upon reference to the attached drawings, wherein:
- Fig. 1:: is a side view of a container ship equipped with a system for connecting an electrical power distribution to a shore side electrical power supply;
- Fig. 2:: is a top view of the container ship of Fig. 1;
- Fig. 3:: is a schematic sectional view of a master shore power supply container;
- Fig. 4:: is a side view of a power cable management system for connecting a stackable shore power supply container to a shore power supply;
- Fig. 5:: is simplified electric circuit diagram illustrating the proposed system; and
- Fig. 6:: is simplified electric circuit diagram illustrating an alternative embodiment in the system of Fig. 5.

### Detailed description of preferred embodiments of the invention

It will be understood that the following description and the drawings to which it refers describe embodiments of the invention for illustration purposes. They shall not limit the scope, nature or spirit of the claimed subject matter.

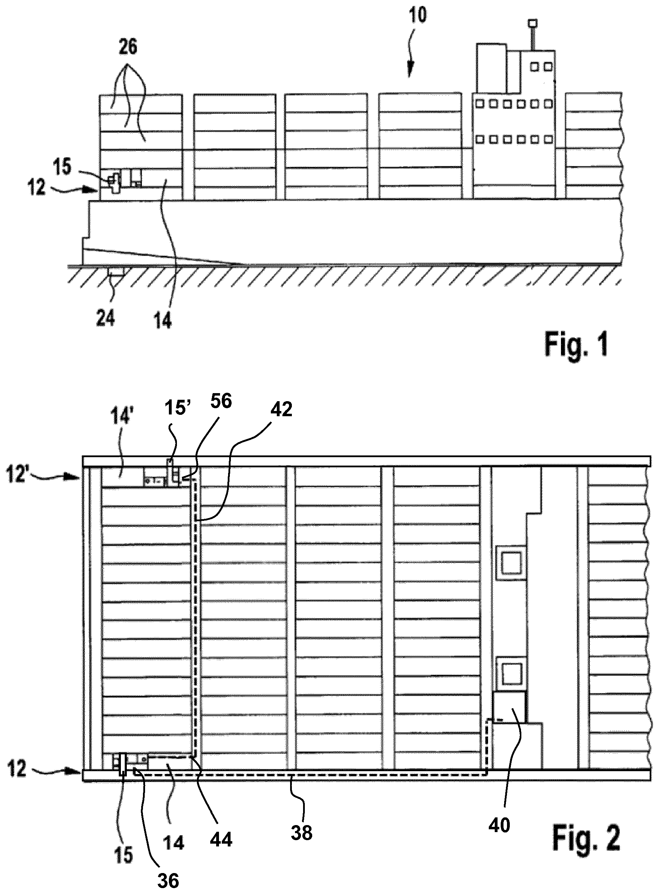

Fig. 1 schematically shows the port side 12 of a container ship 10 (the stern of the ship 10 is not shown). This ship 10 is equipped with a system in accordance with the invention for connecting its electrical on-board power distribution to a shore side electrical power supply, whereby electrical shore power can be transferred to the docked ship 10.

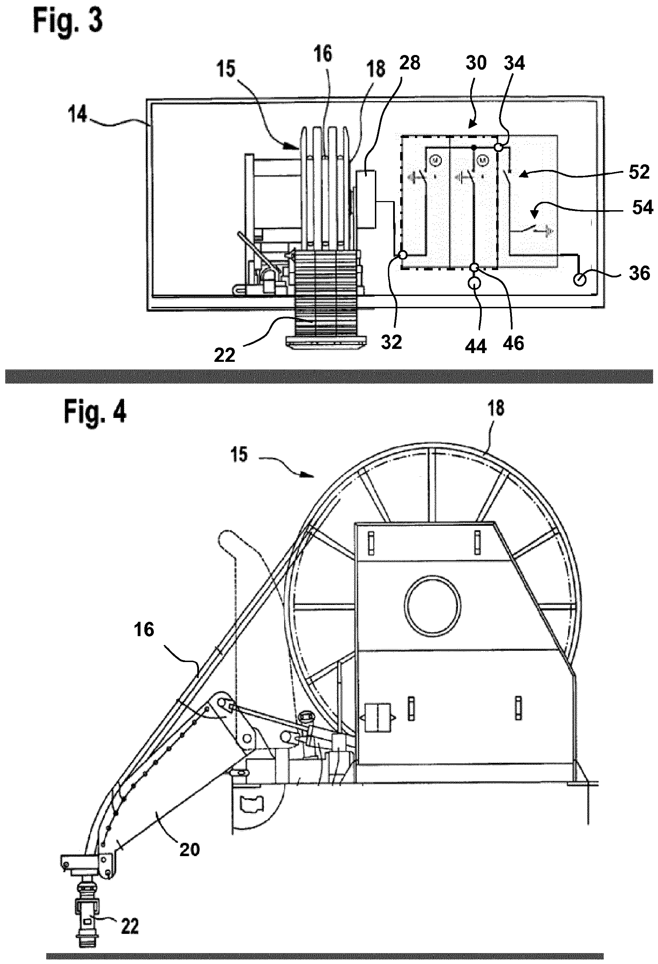

The proposed system comprises a first stackable shore power supply container 14 arranged along the port side 12 of the container ship 10. This stackable shore power supply container 14, an embodiment of which is illustrated in more detail on Fig. 3, comprises at least one cable management system 15 including at least one shore power transfer cable 16 wound on a cable reel 18. The shore power transfer cable 16 has a free end equipped with a connector gear 22, comprising for example a 6.6 kV compatible electrical connector, for connecting the shore power transfer cable 16 to a dockside 6.6 kV shore power supply outlet 24. According to the IEC 80005 High Voltage Shore Connection (HVSC) Systems, the shore power supply outlet 24 must e.g. provide 6.6kV at 60Hz to a total power of 7.5MVA. Upon rotation of the reel 18, generally by operating a motor coupled to the reel 18, the shore power transfer cable 16 is wound onto the reel 18 or unwound therefrom. The cable management system 15 further comprises a cable guide arm 20 arranged near the dock-facing sidewall of the shore power supply container 14. The cable guide arm 20 is pivotable between an active position as shown in Fig. 4 and a rest position as schematically indicated by dotted lines in Fig. 4. Alternatively or additionally, the cable guide arm 20 may have one or more telescopic sections. The cable guide arm 20 is arranged such that, when it is in its active position, it is capable of guiding the shore power transfer cable 16 through an open container door (not shown) of the container 14 over the edge of the container ship 10 and, when it is in its rest position, it is completely located inside of the container, so that the container door can be closed. The main function of the guide arm is to prevent damage to the shore power transfer cable 16 by avoiding that the latter is dragged over the edge of the ship. It remains to be noted that the shore power transfer cable 16 may consists of several bundled power cables and may also include one or more data or control cables, which may comprise copper or fibre optic cables.

Fig. 2 shows that the on-board system comprises a second stackable shore power supply container 14' arranged along the starboard side 12' of the ship. This second stackable shore power supply container 14' also comprises at least one cable management system 15 as shown in Fig. 4.

Both stackable shore power supply containers 14, 14' preferably have standard ISO dimensions and fixing equipment typical for intermodal goods containers 26 as typically transported by the container ship 10. It follows that for fixing both stackable shore power supply containers 14, 14' one can use the same fixing hatches as for the intermodal goods containers 26. Furthermore, both stackable shore power supply containers 14, 14' can be moved with the same transport equipment as the intermodal goods containers 26, i.e. standard dockside or on-board cranes, and can be easily transported by rail or truck within the port or to the port.

Whereas the free end of the shore power transfer cable 16 is connected to the connector gear 22 (see Fig. 4), the other end of the shore power transfer cable 16 (i.e. its end remaining on the cable reel 18) is, in both stackable shore power supply containers 14, 14', connected to a slip ring connection device 28 (see Fig. 3). It will be understood that the slip ring connection device 28 may of course be replaced by any other device that allows the transmission of electrical power from a rotating cable reel to a stationary power distribution.

In the first stackable shore power supply container 14, which is hereinafter called master shore power supply container 14, this slip ring connection device 28 (or its equivalent) is connected to a first inlet port 32 of a switch panel 30 (see e.g. Fig. 3). An outlet port 34 of this switch panel 30 is connected to a shore power outlet 36 of the master shore power supply container 14. As shown in Fig. 2, this shore power outlet 36 is connected via a first on-board shore power system cable 38 to a shore power incoming panel located in an electrical power room 40 somewhere inside the ship 10. The shore power outlet 36 may e.g. be an easily separable connection possibility (like a plug-type or socket-type connection) for connecting thereto the first on-board shore power system cable 38 in an easily separable way or a permanent connection possibility (like a screw-terminal connection or the like) for connecting thereto the first on-board shore power system cable 38 in a (more) permanent way. The shore power outlet 36 may be located inside or outside of the shore power supply container 14.

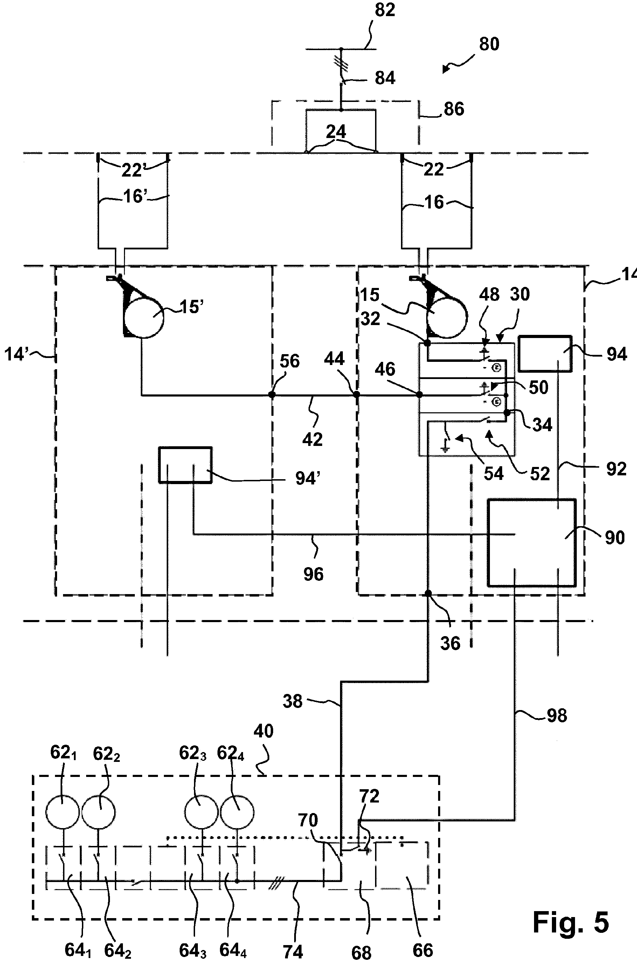

The second stackable shore power supply container 14', which is called hereinafter slave shore power supply container 14', has its slip ring connection device (or any other device that allows the transmission of electrical power from a rotating cable reel to a stationary power distribution) connected via a second on-board shore power system cable 42 to a shore power inlet 44 of the master shore power supply container 14 (see Fig. 2 and 5). The shore power inlet 44 may e.g. be an easily separable connection possibility (like a plug-type or socket-type connection) for connecting thereto the second on-board shore power system cable 42 in an easily separable way or a permanent connection possibility (like a screw-terminal connection or the like) for connecting thereto the second on-board shore power system cable 42 in a (more) permanent way. The shore power inlet 44 may be located inside or outside of the shore power supply container 14.

Inside the master shore power supply container 14, this shore power inlet 44 is electrically connected to a second inlet port 46 of the switch panel 32 (see Fig. 3 and 5). This switch panel 32 is adapted for selectively connecting either its first inlet port 32 (and thereby the slip ring connection device 28 of the cable management system 15 of the master shore power supply container 14) or its second inlet port 44 (and thereby the slip ring connection device of the cable management system 15' of the slave shore power supply container 14') to the shore power outlet 36 of the master shore power supply container 14. In other words, the master shore power supply container 14 is capable of selectively receiving shore power either through its own shore power transfer cable 16 (when the latter is connected to a dockside shore power supply outlet 24) or through the slave shore power supply container 14' connected to its switch panel 30 (when this slave shore power supply container 14' is connected via its shore power transfer cable 16' to the dockside shore power supply outlet 24).

Referring now to Fig. 5, it will be noted that the switch panel 32, which is arranged inside the master shore power supply container 14 (here schematically represented by a dashed box 14), comprises a first motorized switch 48 electrically connected to its first inlet port 32 and a second motorized switch 50 electrically connected to its second inlet port 46. These two motorized switches 48, 50 are electrically connected to the common outlet port 34 of the switch panel 32. In their respective open position (shown in Fig. 5), the first switch 48 grounds the first inlet port 32 and the second switch 50 grounds the second inlet port 32. In their respective closed position (not shown), the first switch 48 connects the first inlet port 32 and the second switch 50 connects the second inlet port 32 to the outlet port 34 of the switch panel 32. The outlet port 34 of the switch panel 32 is connected via a circuit breaker 52 to the shore power outlet 36 of the master shore power supply container 14. A safety grounding switchgear 54, which is electrically connected between the circuit breaker 52 and the shore power outlet 36 of the master shore power supply container 14, allows to ground the shore power outlet 36 and thereby the first on-board shore power system cable 38 (amongst others, for safety reasons, when performing maintenance operations in the master shore power supply container 14).

A safety interlocking system advantageously prevents that the first motorized switch 48 and second motorized switch 50 can be simultaneously closed. This safety interlocking reliably warrants that the shore power transfer cable 16, 16' is always in a tensionless state when it is not connected to shore power.

Still referring to Fig. 5, it will be noted that the slave shore power supply container 14' (schematically represented by the dashed box 14') does not contain a switch panel as described hereinbefore. The slip ring connection device of the cable management system 15' is indeed directly connected to a shore power outlet 56 of the slave shore power supply container 14'. It will however be noted that for providing a (redundant) maintenance safety in the slave shore power supply container 14', it is not excluded that a grounding switchgear (similar to the grounding switchgear 54) is e.g. connected, between the slip ring connection device of the cable management system 15' and the shore power outlet 56 of the slave shore power supply container 14'. The shore power outlet 56 may e.g. be an easily separable connection possibility (like a plug-type or socket-type connection) for connecting thereto the second on-board shore power system cable 42 in an easily separable way or a permanent connection possibility (like a screw-terminal connection or the like) for connecting thereto the second on-board shore power system cable 42 in a (more) permanent way. The shore power outlet 56 may be located inside or outside of the shore power supply container 14'.

In Fig. 5, dashed box 40 schematically represents an electrical power room or room suite located somewhere inside the ship 10. In this electrical power room or room suite 40 are located amongst others: several ship generators 62₁, 62₂, 62₃, 62₄; electrical control cabinets 64₁, 64₂, 64₃, 64₄ associated with the ship generators 62₁, 62₂, 62₃, 62₄; a synchronization panel 66; and a shore power incoming panel 68. The first on-board shore power system cable 38 (or main on-board shore power supply cable 38) is connected to the shore power incoming panel 68. The latter comprises a circuit breaker 70 and a grounding switchgear 72. Via the circuit breaker 70, the shore power cable 38 is electrically connected to a power bus bar assembly 74, to which the ship generators 62₁, 62₂, 62₃, 62₄ are electrically connected. The synchronization panel 66 is adapted for synchronizing at least one of the ship generators 62₁, 62₂, 62₃, 62₄ with the shore power.

In Fig. 5, basic shore side equipment is globally identified with reference number 80. It comprises a shore side bus bar 82, e.g. providing e.g. electric energy with a tension of 6,6 kV and a frequency of 50 Hz or 60 Hz, a shore side circuit breaker 84, and a shore pit 86 comprising e.g. two connector gears (sockets or plugs) for connecting thereto the complementary connector gear 22 or 22' of the shore power transfer cable 16 or 16'.

Still referring to Fig. 5, it will be noted that reference number 90 points to a master control panel arranged in the master shore power supply container 14. This master control panel 90 is connected by via an internal system cable 92 to a slave control panel 94 arranged in the master shore power supply container 14 and via an external system cable 96 to a slave control panel 94' arranged in the slave shore power supply container 14'. Each of the slave control panels 94, 94' collects the signals of local equipment inside the shore power supply container 14, 14' in which it is installed and controls operation of this local equipment (e.g. the operation cable management system 15, 15', the opening of the container door behind which the cable management system 15, 15' is installed, different interlocking systems, different safety systems, etc.). The master control panel 90 collects feedback from the slave control panels 94, 94', provides instructions to the latter and communicates via an external system cable 98 with a central on-board control system of the ship 10. The system cables 92, 96 and 98 preferably comprise at least one data cable (which may be a copper cable and/or a fibre optic cable) and an auxiliary shore power supply cable, which usually provides electrical power at a much lower tension than shore power. The external system cable 98 is advantageously comprised in a cable bundle together with the first on-board shore power system cable 38, and that the external system cable 96 is advantageously comprised in a cable bundle together with the second on-board shore power system cable 42.

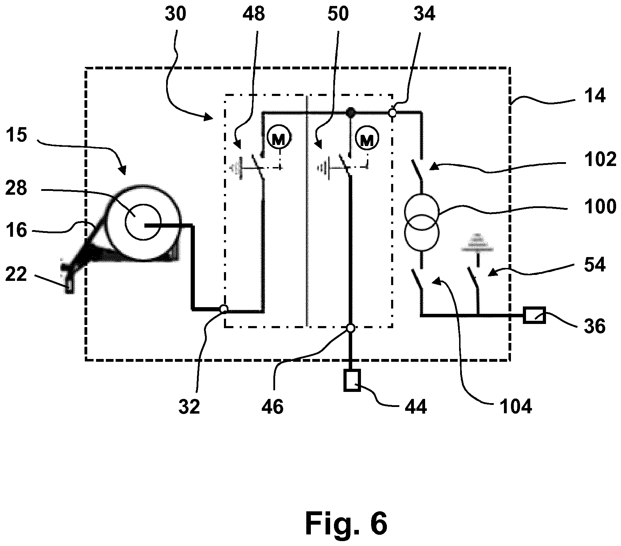

Fig. 6 shows an alternative embodiment of the equipment housed in the master shore power supply container 14. In this embodiment, a step-down transformer 100 is arranged in the master shore power supply container 14, where it is electrically connected between the switch panel 30 and the shore power outlet 36. An inlet circuit breaker 102 is arranged in the master shore power supply container 14, where it is electrically connected between the switch panel 30 and the transformer 100, and an outlet circuit breaker 104 is arranged in the master shore power supply container 14, where it is electrically connected between the transformer 100 and the shore power outlet 36.

It will be appreciated that for installing the proposed system on a ship 10, it is sufficient: (1) to arrange the master shore power supply container 14 and the slave shore power supply container 14' in suitable positions of the ship 10; (2) to connect the master shore power supply container 14 to the electrical power room 40 by means of the cables 38 and 98; and (3) to connect the master shore power supply container 14 to the slave shore power supply container 14' by means of the cables 42 and 96.

While the system described hereinbefore includes just one slave shore power supply container 14', it will be understood that the proposed system may also include several slave shore power supply containers, which are connected to the same master shore power supply container. The latter must then include for each of these slave shore power supply containers a shore power inlet to which one slave shore power supply container can be electrically connected, and the switch panel contained in the master shore power supply container must include, for each of these shore power inlets, a motorized switch electrically connected thereto. With such a solution, the master shore power supply container is capable of selectively receiving shore power either through its own shore power transfer cable or through any one of the slave shore power supply containers connected to its switch panel.

**Reference signs list**

| | | | |
|---|---|---|---|
| 10 | container ship | 42 | second on-board shore power system cable |
| 12 | port side | | |
| 12' | starboard side | 44 | shore power inlet of 14 |
| 14 | first stackable shore power supply container (master shore power supply container) | 46 | second inlet port of 30 |
| | | 48 | first motorized switch |
| | | 50 | second motorized switch |
| 14' | second stackable shore power supply container (slave shore power supply container) | 52 | circuit breaker |
| | | 54 | safety grounding switchgear |
| | | 56 | shore power outlet of 14' |
| 15, 15' | cable management system | 62ᵢ, | ship generators |
| | | 64ᵢ | electrical control cabinets |
| 16, 16' | shore power transfer cable | 66 | synchronization panel |
| | | 68 | shore power incoming panel |
| 18 | cable reel | 70 | circuit breaker |
| 20 | cable guide arm of 15 | 72 | grounding switchgear |
| 22, 22' | connector gear on 16, 16' | 74 | bus bar assembly |
| | | 80 | shore side equipment |
| 24 | dockside shore power supply outlet | 82 | shore side bus bar 82 |
| | | 84 | shore side circuit breaker |
| 26 | intermodal goods containers | 86 | shore pit |
| 28 | slip ring connection device | 90 | master control panel in 14 |
| 30 | switch panel | 92 | cable |
| 32 | first inlet port of 30 | 94, 94' | slave control panel |
| 34 | outlet port of 30 | | |
| 36 | shore power outlet of 14 | 96 | cable |
| 38 | first on-board shore power system cable | 98 | cable |
| | | 100 | step-down transformer |
| 40 | electrical power room (or room suite) | 102 | inlet circuit breaker |
| | | 104 | outlet circuit breaker |

## Claims

1. A system for connecting an electrical power distribution system on a ship to a shore side electrical power supply, comprising:
at least two stackable shore power supply containers (14, 14') to be arranged on the ship, each of the stackable shore power supply containers (14, 14') including at least one shore power transfer cable (16, 16') for connecting the respective stackable shore power supply container to the shore power supply; and
a switch panel (30) for selectively connecting any one of the stackable shore power supply containers (14, 14') to the electrical power distribution system on the ship;
**characterized in that**
the switch panel (30) is contained in one of the stackable shore power supply containers (14), wherein the latter forms a master shore power supply container; and
at least one of the other stackable shore power supply containers (14') forms a slave shore power supply container that is connected to the switch panel (30) of the master shore power supply container, so that the master shore power supply container is capable of selectively receiving shore power either through its own shore power transfer cable (16, 16') or through the at least one slave shore power supply container connected to its switch panel (30).

2. The device as claimed in claim 1, wherein the master shore power supply container includes:
a shore power outlet (36) to be electrically connected to the electrical power distribution system on the ship; and
a shore power inlet (44) to be electrically connected to one of the slave shore power supply containers.

3. The device as claimed in claim 2, wherein the switch panel (30) contained in the master shore power supply container includes:
a first motorized switch (48) connected to the shore power transfer cable (16) of the master shore power supply container; and
a second motorized switch (50) connected to the shore power inlet (44) to which the slave shore power supply container is to be electrically connected.

4. The device as claimed in claim 3, wherein:
the first motorized switch (48) provides in its open position a connection to ground of the shore power transfer cable (16) of the master shore power supply container;
the second motorized switch (50) provides in its open position a connection to ground of the shore power inlet (44) to which the slave shore power supply container is to be electrically connected.

5. The device as claimed in claim 3 or 4, comprising a safety interlocking system (54) preventing that the first motorized switch (48) and second motorized switch (50) can be simultaneously closed.

6. The device as claimed in any one of claims 2 to 5, wherein the master shore power supply container contains a circuit breaker (52) electrically connected between its switch panel (30) and its shore power outlet (36).

7. The device as claimed in claim 6, wherein the master shore power supply container contains a grounding switchgear (72) electrically connected between its circuit breaker (52) and its shore power outlet (36).

8. The device as claimed in any one of claims 2 to 5, wherein:
a step-down transformer (100) is arranged in the master shore power supply container, where it is electrically connected between the switch panel (30) and the shore power outlet (36).

9. The device as claimed in claim 8, comprising:
an inlet circuit breaker (102) arranged in the master shore power supply container, where it is electrically connected between the switch panel (30) and the step-down transformer (100); and
an outlet circuit breaker (104) arranged in the master shore power supply container, where it is electrically connected between the step-down transformer (100) and the shore power outlet (36).

10. The device as claimed in any one of the preceding claims, wherein the slave shore power supply container includes a shore power outlet (56) electrically connected to the shore power transfer cable (16') of the slave shore power supply container.

11. The device as claimed in any one of the preceding claims, wherein:
the master shore power supply container includes more than one shore power inlet (44) to which a slave shore power supply container can be electrically connected; and
the switch panel (30) contained in the master shore power supply container includes, for each of the shore power inlets (44), a motorized switch (46) electrically connected thereto.

12. The device as claimed in any one of the preceding claims, wherein:
a first of the stackable shore power supply containers (14') is to be arranged on the starboard side (12') of the ship;
a second of the stackable shore power supply containers (14) is to be arranged on the port side (12) of the ship.

13. The device as claimed in any one of the preceding claims, wherein:
the shore power transfer cable (16, 16') for connecting the respective stackable shore power supply container to the shore side electrical power supply is part of a cable management system (15, 15') including a cable reel (18) onto which it is wound.

14. The device as claimed in any one of the preceding claims, wherein:
the master shore power supply container further contains a master control system, communicating with and receiving instructions from a control room (40) on the ship (10); and
each slave shore power supply container further contains a slave control system communicating with and receiving instructions from the master control system.

15. The device as claimed in any one of the preceding claims, wherein:
the stackable shore power supply container is an intermodal container or has substantially the same dimensions and fixing possibilities as an intermodal container as an intermodal container.

## Patentansprüche

1. System zum Anschließen eines Stromverteilungssystems eines Schiffs an eine landseitige Stromversorgung, umfassend:
mindestens zwei stapelbare Landstromversorgungscontainer (14, 14'), die auf dem Schiff angeordnet werden sollen, wobei jeder der stapelbaren Landstromversorgungscontainer (14, 14') mindestens ein Landstromübertragungskabel (16, 16') zum Verbinden des jeweiligen stapelbaren Landstromversorgungscontainers mit der Landstromversorgung beinhaltet; und
eine Schalttafel (30) zum selektiven Verbinden eines beliebigen der stapelbaren Landstromversorgungscontainer (14, 14') mit dem Stromverteilungssystem auf dem Schiff;
**dadurch gekennzeichnet, dass**
die Schalttafel (30) in einem der stapelbaren Landstromversorgungscontainer (14) enthalten ist, wobei letzterer einen Master-Landstromversorgungscontainer bildet; und
mindestens einer der anderen stapelbaren Landstromversorgungscontainer (14') einen Slave-Landstromversorgungscontainer bildet, der mit der Schalttafel (30) des Master-Landstromversorgungscontainers verbunden ist, so dass der Master-Landstromversorgungscontainer in der Lage ist, selektiv Landstrom entweder über sein eigenes Landstromübertragungskabel (16, 16') oder über den mindestens einen Slave-Landstromversorgungscontainer, der mit seiner Schalttafel (30) verbunden ist, zu empfangen.

2. Vorrichtung nach Anspruch 1, wobei der Master-Landstromversorgungscontainer Folgendes beinhaltet:
einen Landstromausgang (36), der elektrisch mit dem Stromverteilungssystem auf dem Schiff verbunden werden soll; und
einen Landstromeingang (44), der elektrisch mit einem der Slave-Landstromversorgungscontainer verbunden werden soll.

3. Vorrichtung nach Anspruch 2, wobei die Schalttafel (30), die im Master-Landstromversorgungscontainer enthalten ist, Folgendes beinhaltet:
einen ersten motorisierten Schalter (48), der mit dem Landstromübertragungskabel (16) des Master-Landstromversorgungscontainers verbunden ist; und
einen zweiten motorisierten Schalter (50), der mit dem Landstromeingang (44) verbunden ist, mit dem der Slave-Landstromversorgungscontainer elektrisch verbunden werden soll.

4. Vorrichtung nach Anspruch 3, wobei:
der erste motorisierte Schalter (48) in seiner offenen Stellung eine Verbindung zur Erde des Landstromübertragungskabels (16) des Master-Landstromversorgungscontainers herstellt;
der zweite motorisierte Schalter (50) in seiner offenen Stellung eine Verbindung zur Erde des Landstromeingangs (44), mit dem der Slave-Landstromversorgungscontainer elektrisch verbunden werden soll, herstellt.

5. Vorrichtung nach Anspruch 3 oder 4, umfassend ein Sicherheitsverriegelungssystem (54), das verhindert, dass der erste motorisierte Schalter (48) und der zweite motorisierte Schalter (50) gleichzeitig geschlossen werden können.

6. Vorrichtung nach einem der Ansprüche 2 bis 5, wobei der Master-Landstromversorgungscontainer einen Schutzschalter (52) beinhaltet, der elektrisch zwischen seiner Schalttafel (30) und seinem Landstromausgang (36) verbunden ist.

7. Vorrichtung nach Anspruch 6, wobei der Master-Landstromversorgungscontainer eine Erdungsschaltanlage (72) beinhaltet, die elektrisch zwischen seinem Schutzschalter (52) und seinem Landstromausgang (36) verbunden ist.

8. Vorrichtung nach einem der Ansprüche 2 bis 5, wobei:
ein Abwärtstransformator (100) im Master-Landstromversorgungscontainer angeordnet ist, wo er elektrisch zwischen der Schalttafel (30) und dem Landstromausgang (36) verbunden ist.

9. Vorrichtung nach Anspruch 8, umfassend:
einen Eingangsschutzschalter (102), der im Master-Landstromversorgungscontainer angeordnet ist, wo er elektrisch zwischen der Schalttafel (30) und dem Abwärtstransformator (100) verbunden ist; und
einen Ausgangsschutzschalter (104), der im Master-Landstromversorgungscontainer angeordnet ist, wo er elektrisch zwischen dem Abwärtstransformator (100) und dem Landstromausgang (36) verbunden ist.

10. Vorrichtung nach einem der vorhergehenden Ansprüche, wobei der Slave-Landstromversorgungscontainer einen Landstromausgang (56) beinhaltet, der elektrisch mit dem Landstromübertragungskabel (16') des Slave-Landstromversorgungscontainers verbunden ist.

11. Vorrichtung nach einem der vorhergehenden Ansprüche, wobei:
der Master-Landstromversorgungscontainer mehr als einen Landstromeingang (44), an den ein Slave-Landstromversorgungscontainer elektrisch angeschlossen werden kann, beinhaltet; und
die Schalttafel (30), die im Master-Landstromversorgungscontainer enthalten ist, für jeden der Landstromeingänge (44) einen motorisierten Schalter (46) beinhaltet, der elektrisch damit verbunden ist.

12. Vorrichtung nach einem der vorhergehenden Ansprüche, wobei:
ein erster der stapelbaren Landstromversorgungscontainer (14') auf der Steuerbordseite (12') des Schiffs angeordnet werden soll;
ein zweiter der stapelbaren Landstromversorgungscontainer (14) an der Backbordseite (12) des Schiffs angeordnet werden soll.

13. Vorrichtung nach einem der vorhergehenden Ansprüche, wobei:
das Landstromübertragungskabel (16, 16') zum Verbinden des jeweiligen stapelbaren Landstromversorgungscontainers mit der landseitigen Stromversorgung Teil eines Kabelmanagementsystems (15, 15') ist, beinhaltend eine Kabelrolle (18), auf die es aufgewickelt ist.

14. Vorrichtung nach einem der vorhergehenden Ansprüche, wobei:
der Master-Landstromversorgungscontainer ferner ein Master-Steuerungssystem enthält, das mit einem Kontrollraum (40) auf dem Schiff (10) kommuniziert und Anweisungen von diesem empfängt; und jeder Slave-Landstromversorgungscontainer ferner ein Slave-Steuerungsystem enthält, das mit dem Master-Steuerungsystem kommuniziert und Anweisungen von diesem empfängt.

15. Vorrichtung nach einem der vorhergehenden Ansprüche, wobei:
der stapelbare Landstromversorgungscontainer ein Container für den kombinierten Verkehr ist oder im Wesentlichen die gleichen Abmessungen und Befestigungsmöglichkeiten wie ein Container für den kombinierten Verkehr aufweist.

## Revendications

1. Système de raccordement d'un système de distribution d'énergie électrique sur un navire à une alimentation électrique à quai, comprenant :
au moins deux conteneurs d'alimentation à quai empilables (14, 14') à placer sur le navire, chacun des conteneurs d'alimentation à quai empilables (14, 14') comprenant au moins un câble de transfert d'énergie à quai (16, 16') destiné à raccorder le conteneur d'alimentation à quai empilable respectif à l'alimentation à quai ; et
un panneau de commutation (30) destiné à raccorder sélectivement l'un des conteneurs d'alimentation à quai empilables (14, 14') au système de distribution d'énergie électrique sur le navire ;
**caractérisé en ce que**
le panneau de commutation (30) est contenu dans l'un des conteneurs d'alimentation à quai empilables (14), dans lequel ce dernier forme un conteneur d'alimentation à quai maître ; et
au moins l'un des autres conteneurs d'alimentation à quai empilables (14') forme un conteneur d'alimentation à quai esclave qui est raccordé au panneau de commutation (30) du conteneur d'alimentation à quai maître, de sorte que le conteneur d'alimentation à quai maître est apte à recevoir sélectivement de l'énergie à quai soit par l'intermédiaire de son propre câble de transfert d'énergie à quai (16, 16'), soit par l'intermédiaire dudit au moins un conteneur d'alimentation à quai esclave raccordé à son panneau de commutation (30).

2. Dispositif selon la revendication 1, dans lequel le conteneur d'alimentation à quai maître comprend :
une sortie de courant à quai (36) à raccorder électriquement au système de distribution d'énergie électrique sur le navire ; et
une entrée de courant à quai (44) à raccorder électriquement à l'un des conteneurs d'alimentation à quai esclaves.

3. Dispositif selon la revendication 2, dans lequel le panneau de commutation (30) contenu dans le conteneur d'alimentation à quai maître comprend :
un premier commutateur motorisé (48) raccordé au câble de transfert d'énergie à quai (16) du conteneur d'alimentation à quai maître ; et
un deuxième commutateur motorisé (50) raccordé à l'entrée de courant à quai (44) à laquelle le conteneur d'alimentation à quai esclave doit être raccordé électriquement.

4. Dispositif selon la revendication 3, dans lequel :
le premier commutateur motorisé (48) fournit, dans sa position ouverte, un raccordement à la terre du câble de transfert d'énergie à quai (16) du conteneur d'alimentation à quai maître ;
le deuxième commutateur motorisé (50) fournit, dans sa position ouverte, un raccordement à la terre de l'entrée de courant à quai (44) à laquelle le conteneur d'alimentation à quai esclave doit être raccordé électriquement.

5. Dispositif selon la revendication 3 ou 4, comprenant un système de verrouillage de sécurité (54) empêchant de fermer simultanément le premier commutateur motorisé (48) et le deuxième commutateur motorisé (50).

6. Dispositif selon l'une quelconque des revendications 2 à 5, dans lequel le conteneur d'alimentation à quai maître contient un disjoncteur (52) raccordé électriquement entre son panneau de commutation (30) et sa sortie de courant à quai (36).

7. Dispositif selon la revendication 6, dans lequel le conteneur d'alimentation à quai maître contient un dispositif de commutation de mise à la terre (72) raccordé électriquement entre son disjoncteur (52) et sa sortie de courant à quai (36).

8. Dispositif selon l'une quelconque des revendications 2 à 5, dans lequel :
un transformateur abaisseur (100) est placé dans le conteneur d'alimentation à quai maître, où il est raccordé électriquement entre le panneau de commutation (30) et la sortie de courant à quai (36).

9. Dispositif selon la revendication 8, comprenant :
un disjoncteur d'entrée (102) placé dans le conteneur d'alimentation à quai maître, où il est raccordé électriquement entre le panneau de commutation (30) et le transformateur abaisseur (100) ; et
un disjoncteur de sortie (104) placé dans le conteneur de l'alimentation à quai maître, où il est raccordé électriquement entre le transformateur abaisseur (100) et la sortie de courant à quai (36).

10. Dispositif selon l'une quelconque des revendications précédentes, dans lequel le conteneur d'alimentation à quai esclave comprend une sortie de courant à quai (56) raccordée électriquement au câble de transfert d'énergie à quai (16') du conteneur d'alimentation à quai esclave.

11. Dispositif selon l'une quelconque des revendications précédentes, dans lequel :
le conteneur d'alimentation à quai maître comprend plus d'une entrée d'alimentation à quai (44) à laquelle un conteneur d'alimentation à quai esclave peut être raccordé électriquement ; et
le panneau de commutation (30) contenu dans le conteneur d'alimentation à quai maître comprend, pour chacune des entrées d'alimentation à quai (44), un commutateur motorisé (46) qui y est raccordé électriquement.

12. Dispositif selon l'une quelconque des revendications précédentes, dans lequel :
un premier des conteneurs d'alimentation à quai empilables (14') doit être placé sur le côté tribord (12') du navire ;
un deuxième des conteneurs d'alimentation à quai empilables (14) doit être placé sur le côté bâbord (12) du navire.

13. Dispositif selon l'une quelconque des revendications précédentes, dans lequel :
le câble de transfert d'énergie à quai (16, 16') destiné à raccorder le conteneur d'alimentation à quai empilable respectif à l'alimentation électrique à quai fait partie d'un système de gestion de câbles (15, 15') comprenant une bobine de câble (18) sur laquelle il est enroulé.

14. Dispositif selon l'une quelconque des revendications précédentes, dans lequel :
le conteneur d'alimentation à terre maître contient en outre un système de commande maître, communiquant avec une salle de commande (40) du navire (10) et recevant des instructions en provenance de celle-ci ; et
chaque conteneur d'alimentation à quai esclave contient en outre un système de commande esclave communiquant avec le système de commande maître et recevant des instructions en provenance du système de commande maître.

15. Dispositif selon l'une quelconque des revendications précédentes, dans lequel :
le conteneur d'alimentation à quai empilable est un conteneur intermodal ou présente sensiblement les mêmes dimensions et possibilités de fixation qu'un conteneur intermodal.
